# EUROPEAN PATENT APPLICATION

(11) **EP 1 705 883 A1**
(43) Date of publication of application: **27.09.2006**
(21) Application number: 06006164.5
(22) Date of filing: 24.03.2006
(51) Int. Cl.: H04M 1/725, G06F 21/00

(54) **Mobile terminal and remote control device therefor**

(30) Priority: 24.03.2005 KR 20050024616
(71) Applicant: Samsung Electronics Co., Ltd., Suwon-si, Gyeonggi-Do (KR)
(72) Inventor: Cho, Min-Won c/Samsung Electronics Co., Ltd.,, Suwon-si, Gyeonggi-do (KR)
(74) Representative: Grünecker, Kinkeldey, Stockmair & Schwanhäusser Anwaltssozietät

(57) **Abstract**

A remote control device capable of employing various functions of a mobile terminal through wireless communication, and the mobile terminal therefor. In the remote control device for the mobile terminal, a radio communicator performs wireless data communication with the mobile terminal. A user interface receives data for employing or operating the mobile terminal and provides a user with data received from the mobile terminal. When the data is input through the user interface, a controller includes a unique identifier (ID) of the remote control device in input data to transmit the input data with the unique ID to the mobile terminal through the radio communicator. The controller controls an operation for providing data of the mobile terminal through the user interface if an ID included in the data of the mobile terminal received through the radio communicator matches the unique ID.

## Description

The present invention generally relates to a mobile terminal, and more particularly to a mobile terminal and a remote control device that perform wireless data communication with each other.

Many expensive mobile phones and mobile devices equipped with a Bluetooth module or various radio frequency (RF) modules are being supplied. When these devices are lost, users suffer economic loss. On the other hand, users are inconvenienced in that they must directly manipulate mobile terminals when desiring to use various functions such as a short message service (SMS), an application, and so on.

It is, therefore, the object of the present invention to provide a remote control device capable of employing various functions of a mobile terminal through wireless communication, and the mobile terminal therefor.

This object is solved by the subject matter of the independent claims.

Preferred embodiments are defined in the dependent claims.

In accordance with an aspect of the present invention, there is provided a remote control device for a mobile terminal, including a radio communicator for performing wireless data communication with the mobile terminal; a user interface for receiving data for employing or operating the mobile terminal and providing a user with data received from the mobile terminal; and a controller for interpolating a unique identifier (ID) of the remote control device into inputted data to transmit through the radio communicator when the data is input through the user interface, and controlling an operation for providing data of the mobile terminal through the user interface if an ID included in the data of the mobile terminal received through the radio communicator matches the unique ID.

In accordance with another aspect of the present invention, there is provided a mobile terminal, including a radio communicator for performing wireless data communication with a remote control device for the mobile terminal; and a controller for receiving data for employing or operating the mobile terminal from the remote control device through the radio communicator, controlling an operation of the mobile terminal according to the received data when an identifier (ID) included in the received data matches a preset unique ID of the remote control device for the mobile terminal, including the unique ID in data generated from the mobile terminal, and transmitting the generated data with the unique ID to the remote control device through the radio communicator.

The present invention will be more clearly understood from the following detailed description taken in conjunction with the accompanying drawings, in which:
FIG. 1 illustrates a mobile terminal and a remote control device in accordance with the present invention;
FIG. 2 is a block diagram illustrating a structure of the mobile terminal in accordance with the present invention; and
FIG. 3 is a block diagram illustrating a structure of the remote control device in accordance with the present invention.

Preferred embodiments of the present invention will be described in detail herein below with reference to the accompanying drawings. In the drawings, the same or similar elements are denoted by the same reference numerals even though they are depicted in different drawings. In the following description, detailed descriptions of functions and configurations incorporated herein that are well known to those skilled in the art are omitted for clarity and conciseness.

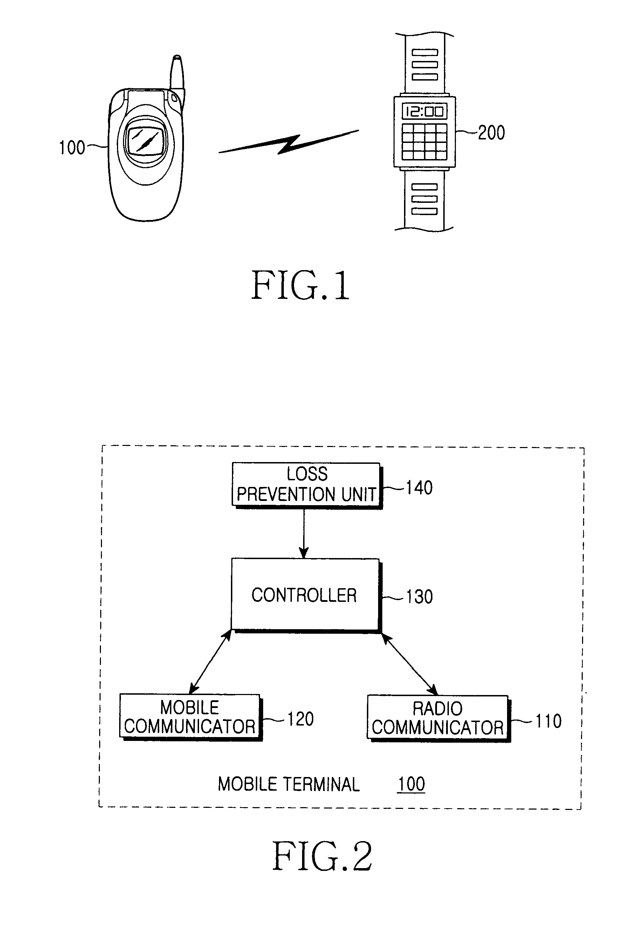

FIG. 1 exemplarily illustrates a mobile terminal and a remote control device in accordance with the present invention. Referring to FIG. 1, the mobile terminal 100 and the remote control device 200 perform wireless communication with each other using a short-range wireless communication scheme such as Bluetooth, a wireless Local Area Network (LAN), Institute of Electrical and Electronics Engineers (IEEE) standard 802.11 scheme, etc. Data for operating or employing the mobile terminal 100 or data generated from the mobile terminal 100 is transmitted and received between the mobile terminal 100 and the remote control device 200. The transmitted and received data includes an identifier (ID) for identifying the remote control device 200. The mobile terminal 100 and the remote control device 200 determine if an ID included in the received data matches a preset unique ID for identifying the remote control device 200. If the ID included in the received data matches the unique ID of the remote control device 200, the mobile terminal 100 or the remote control device 200 operates according to the received data.

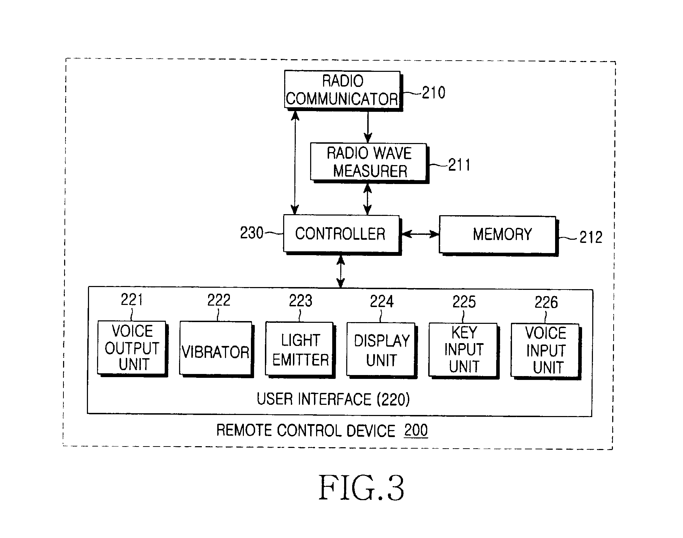

The remote control device 200 remotely employs various functions such as a call, a short message service (SMS), and an application of the mobile terminal 100, etc. The remote control device 200 can be designed in a portable form capable of being conveniently carried by a user, for example, a watch, necklace, or bracelet form. Operation methods of the mobile terminal 100 and the remote control device 200 according to data received between them will be described with reference to the block diagrams of FIGS. 2 and 3.

FIG. 2 is a block diagram illustrating a structure of the mobile terminal in accordance with the present invention.

A radio communicator 110 transmits data to, and receives data from, the remote control device 200 wirelessly. The data is used to operate or employ the mobile terminal 100 or is generated when a call, SMS, or application operates in the mobile terminal 100. A mobile communicator 120 receives a conventional call-related signal and a conventional SMS-related signal through an antenna and then outputs the received signals to a controller 130.

The controller 130 is configured to control the overall operation of the mobile terminal 100 as well as the call, SMS, and application functions. Moreover, the controller 130 receives data transmitted from the remote control device 200, i.e., data for operating or employing the mobile terminal 100, through the radio communicator 110. The controller 130 determine if an ID included in the received data matches a preset unique ID for identifying the remote control device 200. If the ID included in the received data matches the unique ID of the remote control device 200, the controller 130 controls the operation of the mobile terminal 100 according to the received data. However, if the ID included in the received data does not match the unique ID of the remote control device 200, the controller 130 determines that the received data is not data transmitted from the remote control device 200 and makes no reply.

The controller 130 includes the unique ID in data to be transmitted to the remote control device 200 (i.e., data generated from the call, SMS, and application functions and received data). Then, the controller 130 outputs the data with the unique ID to the radio communicator 110.

A loss prevention unit 140 generates loss prevention data including transmission time information at a predetermined time interval and then outputs the generated loss prevention data to the controller 130. The controller 130 transmits the loss prevention data to the remote control device 200 through the radio communicator 110 whenever the loss prevention unit 140 generates the loss prevention data. The unique ID is included in the loss prevention data.

There will now be described an example in which the controller 130 includes the unique ID in generated data when the call, SMS, or application function operates and transmits the data with the unique ID to the remote control device 200 through the radio communicator 110 such that the user can identify the data.

When an incoming signal is received through the mobile communicator 120, the controller 130 transmits data of signal reception notification to the remote control device 200 through the radio communicator 110. The data of signal reception notification includes a calling number. When the remote control device 200 receives the data of signal reception notification, the user can know that the incoming signal has been received without directly employing the mobile terminal 100.

When a short message is received through the mobile communicator 120, the controller 130 transmits data of short message reception notification to the remote control device 200 through the radio communicator 110. When the remote control device 200 receives the data of short message reception notification, the user can know that the short message has been received without directly employing the mobile terminal 100.

The operation method of the remote control device 200 at the time of receiving data from the mobile terminal 100 and the structure of the remote control device 200 for operating or employing the mobile terminal 100 will be described in more detail with reference to the block diagram of FIG. 3.

A radio communicator 210 of the remote control device 200 receives data from the mobile terminal 100 wirelessly. The radio communicator 210 transmits data for operating or employing the mobile terminal 100 to the mobile terminal 100 wirelessly. Under control of a controller 230, a radio wave measurer 211 measures radio wave strength of loss prevention data when data received through the radio communicator 210 is the loss prevention data, i.e., data generated from the loss prevention unit 140 of the mobile terminal 100 (FIG. 2). The radio wave measurer 211 outputs a measurement result to the controller 230. Under the control of the controller 230, a memory 212 stores transmission time information included in the loss prevention data whenever the loss prevention data is received through the radio communicator 210.

A user interface 220 receives data, from the user, needed to operate or employ the mobile terminal 100. Moreover, the user interface 220 provides data of the mobile terminal 100 received through the radio communicator 210 in a form capable of being recognized by the user. The user interface 220 includes a voice output unit 221 for converting voice data to an audible voice signal capable of being recognized by the user and outputting the audible voice signal, a vibrator 222 for vibrating the remote control device 200, a light emitter 223 for emitting light, a display unit 224 for displaying the operation of the remote control device 200, a key input unit 225 for receiving, from the user, a key input for operating or employing the mobile terminal 100, and a voice input unit 226 for receiving the voice of the user.

When the data for operating or employing the mobile terminal is input through the user interface 220, the controller 230 includes a unique ID set to identify the remote control device 200 in the input data and then transmits the input data with the unique ID to the mobile terminal 100 through the radio communicator 210. Moreover, the controller 230 receives data transmitted from the mobile terminal 100, for example, loss prevention data, or data of signal or short message reception notification, through the radio communicator 210. The controller 230 determines if an ID included in the received data matches the unique ID of the remote control device 200. If the ID included in the received data matches the unique ID of the remote control device 200, the controller 230 controls the user interface 220 to provide the received data in a form capable of being recognized by the user. However, if the ID included in the received data does not match the unique ID of the remote control device 200, the controller 230 determines that the received data is not data transmitted from the mobile terminal 100 operated or employed by the remote control device 200 and makes no reply.

Next, the operation method of the remote control device 200 at the time of receiving data from the mobile terminal 100 will be described in more detail. It is assumed that the ID included in the data transmitted from the mobile terminal 100 matches the unique ID of the remote control device 200 as a result of a determination of the controller 230.

First, the case where the remote control device 200 receives loss prevention data transmitted from the mobile terminal 100 will be described. The controller 230 stores transmission time information included in the loss prevention data in the memory 212 whenever the loss prevention data is received through the radio communicator 210. When the loss prevention data is received, the controller 230 determines if radio wave strength of the loss prevention data measured by the radio wave measurer 211 is less than a preset value. The preset value may be a value of radio wave strength capable or incapable of being measured. The preset value is set to be proportional to a reference distance for loss prevention between the mobile terminal 100 and the remote control device 200.

When the measured radio wave strength of loss prevention data is less than the preset value, the controller 230 determines if a state of radio wave of less than the preset value is maintained during a preset time. The preset time is a minimum time needed to determine loss prevention when the distance between the mobile terminal 100 and the remote control device 200 exceeds the reference distance for loss prevention. The controller 230 determines if the measured radio wave strength of loss prevention data less than the preset value is maintained during the preset time by measuring a difference between the present time and the last transmission time of loss prevention data stored in the memory 212 and determining if the measured time difference is more than the preset time.

If the measured time difference is more than the preset time as a determination result, the controller 230 provides information indicating that the mobile terminal 100 has been lost to the user through the user interface 220. For example, the controller 230 outputs a ring sound through the voice output unit 221, vibrates the remote control device 200 through the vibrator 222, or emits light through the light emitter 223 to give notification indicating that the mobile terminal 100 has been lost.

That is, the controller 230 determines the loss of the mobile terminal 100 by measuring the radio wave strength of loss prevention data transmitted from the mobile terminal 100 and enables the user to prevent the loss of the mobile terminal 100 by operating the remote control device 200 according to the above-described method. The user can preset the ring sound, vibration, or light emission. One of the ring sound, vibration, and light emission notification means can operate or all the ring sound, vibration, and light emission notification means can simultaneously operate. These functions not only can prevent the loss of the mobile terminal, but also can prevent a missing child incident when a guardian and a child have any one of the mobile terminal 100 and the remote control device 200, respectively. If separation between the guardian and the child exceeds the referenced distance for the preset time, then the notification means will provide warning.

Next, the case where the remote control device 200 receives data of signal reception notification transmitted from the mobile terminal 100 will be described. When receiving the data of signal reception notification, i.e., data indicating that an incoming signal has been received in the mobile terminal 100, through the radio communicator 210, the controller 230 outputs the ring sound through the voice output unit 221, vibrates the remote control device 200 through the vibrator 222, or emits light through the light emitter 223. As described above, the user can preset the ring sound, vibration, or light emission. One of the ring sound, vibration, and light emission notification means can operate or all the ring sound, vibration, and light emission notification means can simultaneously operate.

When a calling number is included in the data of signal reception notification, the controller 230 displays the calling number through the display unit 224. If the user inputs a predetermined key through the key input unit 225 while he/she is being notified that the incoming signal has been received in the mobile terminal 100 through the above-described method (i.e., if the mobile terminal user conventionally inputs any key except an End key to receive an incoming call when the incoming call has been received), the controller 230 transmits control data to the mobile terminal 100 through the radio communicator 210 such that the mobile terminal 100 can receive the incoming signal.

When the radio communicator 110 of the mobile terminal 100 receives the control data for the incoming signal reception from the remote control device 200 and then outputs the control data to the controller 130, the controller 130 performs the incoming signal reception. Here, a result of key manipulation in the remote control device 200 is the same as that of key manipulation in the mobile terminal 100. The controller 130 of the mobile terminal 100 responds to the incoming signal, performs the incoming signal reception through the mobile communicator 120, and attempts a call connection with an opposite side (connecting party).

In a state of the call connection with the opposite side, the controller 130 of the mobile terminal 100 transmits voice data received from the opposite side to the remote control device 200 through the mobile communicator 120. When the radio communicator 210 of the remote control device 200 receives the voice data of the opposite side and outputs the received voice data to the controller 230, the controller 230 converts the voice data of the opposite side to an audible voice signal capable of being recognized by the user to output the audible voice signal through the voice output unit 221. The controller 230 receives the voice data of the user input through the voice input unit 226 and then transmits the received voice data to the mobile terminal 100 through the radio communicator 210.

When the radio communicator 110 of the mobile terminal 100 receives the voice data of the user and outputs the received voice data to the controller 130, the controller 130 transmits the voice data of the user to the opposite side through the mobile communicator 120. As described above, the user can communicate with the opposite side through the remote control device 200 without directly employing the mobile terminal 100 because the voice data can be transmitted and received between the mobile terminal 100 and the remote control device 200.

Because the key input unit 225 of the remote control device 200 is provided with number and Send keys for inputting a phone number like a conventional keypad of the mobile terminal 100, the user not only can receive an incoming call, but also can transmit an outgoing call using the remote control device 200. When receiving a phone number for a phone call and the Send key through the key input unit 225, the controller 230 transmits control data for making the phone call to the phone number to the mobile terminal 100 through the radio communicator 210.

Then, the radio communicator 110 of the mobile terminal 100 receives the control data for performing the phone call and then outputs the received control data to the controller 130. The controller 130 transmits a signal to the phone number input through the remote control device 200. When the opposite side receives the signal, the controller 130 of the mobile terminal 100 receives voice data of the opposite side through the mobile communicator 120 and then transmits the received voice data to the remote control device 200 through the radio communicator 110. When the radio communicator 210 of the remote control device 200 receives the voice data of the opposite side and then outputs the received voice data to the controller 230, the controller 230 converts the voice data of the opposite side to an audible voice signal to output the audible voice signal through the voice output unit 221. The controller 230 receives voice data of the user input through the voice input unit 226 and then transmits the received voice data to the mobile terminal 100 through the radio communicator 210. When the radio communicator 110 of the mobile terminal 100 receives the voice data of the user and then outputs the received voice data to the controller 130, the controller 130 transmits the voice data of the user to the opposite side through the mobile communicator 120.

Next, the case where the remote control device 200 receives data of short message reception notification from the mobile terminal 100 will be described. When receiving the data of short message reception notification (i.e., data indicating that a short message has been received in the mobile terminal 100), through the radio communicator 210, the controller 230 outputs a ring sound through the voice output unit 221, vibrates the remote control device 200 through the vibrator 222, or emits light through the light emitter 223.

Accordingly, the user can determine that a new short message has been received and can input a key for identifying the received short message through the key input unit 225. That is, the mobile terminal user inputs any key in a conventional manner except the End key to identify a short message when the short message has been received. Then, the controller 230 transmits data for requesting content of the short message mapped to the notification data to the mobile terminal 100 through the radio communicator 210.

The controller 130 of the mobile terminal 100 receives the data for requesting the content of the short message and then transmits the content of the short message to the remote control device 200 through the radio communicator 110. When the radio communicator 210 of the remote control device 200 receives the content of the short message and then outputs the received content of the short message to the controller 230, the controller 230 displays the content of the short message on the display unit 224. Here, a result of key manipulation in the remote control device 200 is the same as that of key manipulation in the mobile terminal 100. The controller 130 of the mobile terminal 100 displays the content of the short message received through the mobile communicator 120 on the display unit 224 of the remote control device 200. Accordingly, the user can identify the content of the short message newly received in the mobile terminal 100 through the remote control device 200 without directly identifying the short message in the mobile terminal 100.

Using the alphanumeric keys provided in the key input unit 225 of the remote control device 200, the user not only can create a short message in the conventional text input method, but also can employ various SMSs. Upon receiving a key for employing the SMS through the key input unit 225, the controller 230 transmits control data for operating the SMS to the mobile terminal 100 through the radio communicator 210.

When the radio communicator 110 of the mobile terminal 100 receives the control data for operating the SMS and then outputs the received control data to the controller 130, the controller 130 operates the SMS. At this time, the controller 130 of the mobile terminal 100 transmits data configuring an SMS screen to the remote control device 200 through the radio communicator 110. The radio communicator 210 of the remote control device 200 receives the data configuring the screen and then outputs the received screen data to the controller 230, the controller 230 controls an operation for displaying the SMS screen on the display unit 224 using the received screen data.

Accordingly, the user can view the screen displayed on the display unit 224 and can input a key for employing the SMS through the key input unit 225. For example, the key input by the user may be a key for creating a short message, a key for identifying an existing short message stored in the mobile terminal 100, and so on. When the controller 230 transmits data mapped to a key input from the key input unit 225 to the mobile terminal 100 through the radio communicator 210, the radio communicator 110 of the mobile terminal 100 outputs the received data to the controller 130. The controller 130 of the mobile terminal 100 operates an ongoing SMS according to data input from the radio communicator 110. That is, the user can employ the SMS through the remote control device 200 without directly manipulating the mobile terminal 100.

On the other hand, the user can also employ applications of the mobile terminal 100 through the remote control device 200 in the same way that the SMS is employed. To employ an application of the mobile terminal 100, the user can input a preset key through the key input unit 225. Upon receiving a key input for employing a predetermined application through the key input unit 225, the controller 230 of the remote control device 200 transmits control data for operating an application based on the key input to the mobile terminal 100 through the radio communicator 210.

When the radio communicator 110 of the mobile terminal 100 receives the control data for operating the application and then outputs the received control data to the controller 130, the controller 130 operates the application in response to the key input. At this time, the controller 130 of the mobile terminal 100 transmits data configuring a picture or video of the application to the remote control device 200 through the radio communicator 110. The radio communicator 210 of the remote control device 200 receives the data configuring the picture or video and then outputs the received picture or video data to the controller 230. The controller 230 controls an operation for outputting the picture or video through the display unit 224 or the voice output unit 221 using the received picture or video data.

Accordingly, the user can view and listen to the picture or video output through the display unit 224 and the voice output unit 221. When the application is operated in the mobile terminal 100, the picture or video is output through the display unit 224 or the voice output unit 221 of the remote control device 200. As a result, the user can employ the applications through the remote control device 200 without directly employing the mobile terminal 100. The user can input a key for employing an application through the key input unit 225 while viewing and listening to the picture or video provided through the display unit 224 and the voice output unit 221. When the controller 230 receives data mapped to a key input through the key input unit 225 and then transmits the received data to the mobile terminal 100 through the radio communicator 210, the radio communicator 110 of the mobile terminal 100 outputs the received data to the controller 130. The controller 130 operates an ongoing application according to data input from the radio communicator 110.

As is apparent from the above description, the present invention discloses a mobile terminal and a remote control device that can perform wireless data communication with each other and that can allow a user to remotely employ or operate the mobile terminal, thereby improving convenience for the user.

Moreover, the present invention not only can prevent the loss of the mobile terminal, but also can prevent a missing child incident when a guardian and a child have any one of the mobile terminal and the remote control device because a distance between the mobile terminal and the remote control device is measured and a warning is provided.

Although preferred embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims.

## Claims

1. A remote control device for a mobile terminal, comprising:
a radio communicator for performing wireless data communication with the mobile terminal;
a user interface for receiving data for at least one of employing and operating the mobile terminal and providing a user with data received from the mobile terminal; and
a controller for interpolating a unique ID of the remote control device into inputted data to transmit to the mobile terminal through the radio communicator when the data is input through the user interface, and controlling an operation for providing data of the mobile terminal through the user interface if an ID included in the data of the mobile terminal received through the radio communicator matches the unique ID.

2. The remote control device of claim 1, further comprising:
a radio wave measurer for measuring radio wave strength of loss prevention data received from the mobile terminal through the radio communicator; and
a memory for storing transmission time information included in the loss prevention data whenever the loss prevention data is received,
wherein the controller measures a difference between a present time and a last transmission time of loss prevention data stored in the memory in a state in which the radio wave strength of the loss prevention data is less than a preset value, and provides the user with information indicating that the mobile terminal has been lost through the user interface when the measured time difference is more than a preset time.

3. The remote control device of claim 2, wherein the user interface comprises:
a voice output unit for converting voice data to an audible voice signal capable of being recognized by the user and outputting the audible voice signal;
a vibrator for vibrating the remote control device; and
a light emitter for emitting light;
wherein the controller provides the user with the information indicating that the mobile terminal has been lost by at least one of outputting ring sound through the voice output unit, vibrating the remote control device, and emitting light through the light emitter.

4. The remote control device of claim 3, wherein the controller performs at least one of outputting ring sound through the voice output unit, vibrating the remote control device, and emitting light through the light emitter, when receiving data of signal reception notification from the mobile terminal through the radio communicator.

5. The remote control device of claim 4, wherein the user interface further comprises:
a display unit for displaying data received through the radio communicator;
wherein the controller displays a calling number through the display unit when receiving the data of signal reception notification through the radio communicator.

6. The remote control device of claim 5, wherein the user interface further comprises:
a key input unit for receiving a key input from the user;
wherein the controller transmits control data for the mobile terminal's signal reception to the mobile terminal through the radio communicator when a predetermined key is input through the key input unit while the data of signal reception notification is being received through the radio communicator.

7. The remote control device of claim 6, wherein the user interface further comprises:
a voice input unit for receiving voice of the user;
wherein the controller receives voice data of an opposite side, transmitted to the mobile terminal, through the radio communicator, outputs the received voice data through the voice output unit, and transmits voice data of the user, input through the voice input unit, to the mobile terminal through the radio communicator, in a call connection state according to the signal reception when the mobile terminal receives the control data for the signal reception.

8. The remote control device of claim 6 or 7, wherein the controller transmits control data for making a phone call to a phone number in the mobile terminal to the mobile terminal through the radio communicator when receiving the phone number for the phone call and a Send key through the key input unit.

9. The remote control device of claim 8, wherein the controller receives voice data of an opposite side, transmitted to the mobile terminal, through the radio communicator, outputs the received voice data through the voice output unit, and transmits voice data of the user, input through a voice input unit, to the mobile terminal through the radio communicator, in a call connection state according to the signal reception when the mobile terminal receives the control data for the signal reception.

10. The remote control device of claim 6, wherein the controller performs at least one of outputting ring sound through the voice output unit, vibrating the remote control device, and emitting light through the light emitter, when receiving data of short message reception notification from the mobile terminal through the radio communicator.

11. The remote control device of claim 10, wherein when a key for identifying the data of short message reception notification is input through the key input unit, the controller transmits a request for content of a short message mapped to the notification data to the mobile terminal, receives the content of the short message from the mobile terminal through the radio communicator, and displays the received content of the short message through the display unit.

12. The remote control device of claim 6, wherein the controller transmits control data for operating an SMS in the mobile terminal to the mobile terminal through the radio communicator when receiving a key input for employing the SMS through the key input unit.

13. The remote control device of claim 12, wherein when the mobile terminal receives the control data for operating the SMS and operates the SMS, the controller receives data configuring a screen of the SMS operating in the mobile terminal from the mobile terminal through the radio communicator and controls an operation for displaying the SMS screen on the display unit.

14. The remote control device of claim 13, wherein when a predetermined key is input through the key input unit in a state in which the SMS screen is displayed through the display unit, the controller transmits data mapped to the input key to the mobile terminal through the radio communicator and operates the SMS in the mobile terminal.

15. The remote control device of claim 6, wherein the controller transmits control data for operating an application based on a key input to the mobile terminal through the radio communicator when receiving the key input for employing the application of the mobile terminal through the key input unit.

16. The remote control device of claim 15, wherein when the mobile terminal receives control data for operating the application and operates the application, the controller receives data, configuring at least one of a picture and video of the application operating in the mobile terminal, from the mobile terminal through the radio communicator and controls an operation for outputting the at least one of picture and video of the application through at least one of a display unit and the voice output unit.

17. The remote control device of claim 16, wherein when a predetermined key is input through the key input unit in a state in which at least one of the picture and video of the application is at least one of displayed and output through the at least one of display unit and the voice output unit, the controller transmits data mapped to the input key to the mobile terminal through the radio communicator and operates the application in the mobile terminal.

18. The remote control device of one of claims 1 to 17, wherein the radio communicator performs wireless communication with the mobile terminal through Bluetooth communication.

19. The remote control device of one of claims 1 to 17, wherein the radio communicator performs wireless communication with the mobile terminal through wireless LAN communication.

20. The remote control device of one of claims 1 to 17, wherein the radio communicator performs wireless communication with the mobile terminal through IEEE 802.11 communication.

21. The remote control device of one of claims 1 to 20, wherein the remote control device has a watch form.

22. The remote control device of one of claims 1 to 20, wherein the remote control device has a necklace form.

23. The remote control device of one of claims 1 to 20, wherein the remote control device has a bracelet form.

24. A mobile terminal, comprising:
a radio communicator for performing wireless data communication with a remote control device for the mobile terminal; and
a controller for receiving data for at least one of employing and operating the mobile terminal from the remote control device through the radio communicator, controlling an operation of the mobile terminal according to the received data when an ID included in the received data matches a preset unique ID of the remote control device for the mobile terminal, including the unique ID in data generated from the mobile terminal, and transmitting the generated data with the unique ID to the remote control device through the radio communicator.

25. The mobile terminal of claim 24, further comprising:
a loss prevention unit for generating loss prevention data comprising transmission time information at a predetermined time interval,
wherein the controller transmits the loss prevention data to the remote control device through the radio communicator whenever the loss prevention unit generates the loss prevention data.

26. The mobile terminal of claim 24, wherein the controller transmits data of signal reception notification to the remote control device through the radio communicator when a signal is received in the mobile terminal.

27. The mobile terminal of claim 26, wherein the data of signal reception notification comprises a calling number.

28. The mobile terminal of claim 26, wherein the controller receives the signal when control data for signal reception is received from the remote control device while the data of signal reception notification is being transmitted.

29. The mobile terminal of claim 28, wherein the controller transmits voice data of an opposite side to the remote control device through the radio communicator in a call connection state according to the signal reception.

30. The mobile terminal of claim 28, wherein the controller receives voice data of a user from the remote control device through the radio communicator in the call connection state according to the signal reception and transmits the received voice data to the opposite side.

31. The mobile terminal of claim 24, wherein the controller transmits data of short message reception notification to the remote control device through the radio communicator when a short message is received in the mobile terminal.

32. The mobile terminal of claim 31, wherein the controller transmits content of the short message to the remote control device when receiving data for requesting the content of the short message from the remote control device through the radio communicator, the remote control device responding to the data of short message reception notification.

33. The mobile terminal of one of claims 24 to 32, wherein the controller operates an SMS when receiving control data for operating the SMS from the remote control device through the radio communicator.

34. The mobile terminal of claim 33, wherein the controller transmits data configuring a screen of the SMS to the remote control device through the radio communicator.

35. The mobile terminal of claim 34, wherein the controller operates the SMS according to received data when receiving the data for performing the SMS from the remote control device through the radio communicator.

36. The mobile terminal of one of claims 24 to 32, wherein the controller operates a predetermined application when receiving control data for operating the predetermined application from the remote control device through the radio communicator.

37. The mobile terminal of claim 36, wherein the controller transmits data configuring at least one of a picture and video of an operated application to the remote control device through the radio communicator.

38. The mobile terminal of claim 37, wherein the controller operates an application according to received data when receiving the data for performing the application from the remote control device through the radio communicator.

39. The mobile terminal of one of claims 24 to 38, wherein the radio communicator performs wireless communication with the remote control device for the mobile terminal through Bluetooth communication.

40. The mobile terminal of one of claims 24 to 38, wherein the radio communicator performs wireless communication with the remote control device for the mobile terminal through wireless LAN communication.

41. The mobile terminal of one of claims 24 to 38, wherein the radio communicator performs wireless communication with the remote control device for the mobile terminal through IEEE 802.11 communication.
